# EUROPEAN PATENT APPLICATION

(11) **EP 0 652 140 A1**
(43) Date of publication of application: **10.05.1995**
(21) Application number: 93118090.5
(22) Date of filing: 08.11.1993
(51) Int. Cl.: B60R 21/18

(54) **Automobile safety air belt with air bag**

(71) Applicant: Ohm, Hang Sup, Seoul (KR)
(72) Inventor: Ohm, Hang Sup, Seoul (KR)
(74) Representative: Popp, Eugen, Dr.

(57) **Abstract**

An automobile safety air belt (10) is provided with air passages (11,12) in its sections corresponding to the abdomen, the side, the breast and the shoulder of a passenger (100), and with an air bag (13) in its section intending to be fastened diagonally about the upper part of the passenger body from the side to the shoulder through the breast. The air passages (11,12) and air bag (13) are folded and protected by a protection cover (14) having a breakable section. In case of a traffic accident, the safety air belt (10) is inflated with pressurized air in its air passages (11,12) as well as in its air bag (13) by an operating device (17) thus breaking the breakable section of the protective cover (14) and causing the expanded air bag (13) to be precisely and rapidly interposed between the passenger (100) and the car body irrespective of collision velocity of the automobile.

## Description

### BACKGROUND OF THE INVENTION

### Field of the Invention

The present invention relates in general to an automobile safety belt for protection of a passenger from collision with hard materials of the automobile in traffic accident, and more particularly to a structural improvement of such an automobile safety belt.

### Description of the Prior Art

As well known to those skilled in the art, automobiles are generally provided with safety equipments, such as air bags and safety belts, for protection of a passenger from collision with hard materials, particularly provided in a cabin of the automobile, in traffic accident including automobile collision.

The air bags for protection of the passenger from collision using air cushion effect are conventionally classified into electronic type air bags and mechanical type air bags. The known air bag, irrespective of its type, generally includes an operating device which senses abrupt change of inertia force, caused by mechanical shock applied to the car body in a traffic accident such as collision of the automobile, in a short time and makes pressurized air be charged in the air bag. These prior art air bags are disclosed; for example; in Japanese Utility Model Laid-open Publication Nos. Sho. 63-28004, Sho. 63-50203. Heisei. 2-2683 and Heisei. 2-20127.

The air bag is generally equipped at an upper section, a side section or a lower section of the automobile cabin and rapidly charged with the pressurized air in the case of collision of the automobile in order to be expanded and to be interposed between the car body and the passenger. For example, Japanese Utility Model Laid-open Publication No. Sho. 61-11084 discloses an air bag which is installed in a steering wheel of the automobile and interposed between the steering wheel and the driver while being expanded in the case of collision of automobile, thus to protect the driver from collision with hard materials including the steering wheel.

It is noted that when the collision velocity of the automobile is lower than a predetermined level and the passenger fastens the safety belt; the above air bags are sufficiently expanded and precisely interposed between the passenger and the car body before collision of the passenger with the car body; thus to achieve the desired protection of the passenger from collision with the car body. However, the above air bags may not achieve the desired protection of the passenger from collision when the passenger does not fasten the safety belt. Particularly, when the collision velocity of the automobile is higher than the predetermined level, the time until collision of the passenger with the car body is shortened than the aforementioned case. This causes deficient expansion of the air bag and prevents the air bag from precise interposition between the passenger and the car body, thus to cause failure in protection of the passenger from collision with the car body.

In order to completely achieve the desired protection effect of the prior art air bags, it should be maintained a predetermined relation between a posture of the passenger on a seat and an initial expanding position of the air bag equipped at the upper section, the side section or the lower section of the automobile cabin. However, since the passengers have different body profiles, the predetermined relation between a certain passenger posture and the initial expanding position of the air bag is not appropriate to all the passengers. Thus, a desired rapid and precise operation for expansion of the air bag and for precise interposition of the expanded air bag between a passenger and the car body is scarcely achieved. Particularly, the air bag, disclosed in the above Japanese Utility Model Laid-open Publication No. Sho. 61-11084 and installed in the steering wheel of the automobile in order to be interposed between the steering wheel and the driver, can not protect the passengers except for the driver from collision with the car body.

Meanwhile, the prior art safety belts show simple belt shapes and are constructed to be fastened around only the abdominal region of the passenger or around the abdominal region as well as diagonally around the upper body including the breast and the shoulder of the passenger, thus to protect the passenger from collision with the car body in the traffic accident such as automobile collision. However, the prior art safety belts showing the simple belt shapes can not absorb the mechanical shock caused by the automobile collision but directly apply the shock to the passenger. Hence, the known safety belts may cause a serious injury of the passenger such as an intestinal rupture or fracture of a bone in the case of a high speed collision of the automobile.

### SUMMARY OF THE INVENTION

It is, therefore, an object of the present invention to provide an automobile safety air belt with an air bag in which the aforementioned problems caused by both the prior art air bags and the prior art safety belts can be overcome and which is provided with air passages in its sections corresponding to the abdomen, the side, the breast and the shoulder of a passenger, and more particularly with an air bag in its section intending to be fastened diagonally about the upper part of the passenger body from the side to the shoulder through the breast.

In the case of a traffic accident such as collision of the automobile, the safety air belt according to the present invention is charged in a moment with the pressurized air in its air passage as well as in its air bag by an additional operating device in order to be expanded, thus to cause the expanded air bag to be precisely rapidly interposed between the passenger and the car body irrespective of collision velocity of the automobile and to reliably protect the passenger from collision with the car body. Differently from the prior art safety belts, the safety air belt of the present invention forms an air belt section due to the air passages charged with the pressurized air in the case of automobile collision, thus to sufficiently absorb the mechanical shock otherwise applied to the abdomen, the breast and the shoulder of the passenger, and to prevent a serious injury of the passenger such as an intestinal rupture or fracture of a bone.

In order to accomplish the above object, a safety air belt with an air bag in accordance with an embodiment of the present invention is connected at an end thereof to a take-up member of a car body and at the other end thereof to a fixing member of the car body, and comprises: an air bag packed in a middle section of the belt such that it is exposed to the outside of the belt when it is charged with pressurized air and expanded; a pair of air passages provided in the belt on opposed sides of the air bag and communicating with each other through the air bag; a protection cover covering the air bag as well as the air passages, the protection cover having a breakable section for receiving the air bag and allowing the air bag to be exposed to the outside of the cover through the breakable section when the air bag is charged with the pressurized air; a lock hanger movably inserted on the protection cover and detachably locked to a locking member of the car body, the lock hanger having an opening for receiving the protection cover; a nipple mounted on the protection cover such that it communicates with one of the air passages, the nipple being connected to operating means through a high pressure hose in order to supply the pressurized air from the operating means to the air passages as well as to the air bag.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a partial perspective view of a safety air belt with an air bag in accordance with an embodiment of the present invention;
Fig. 2 is a partial sectional view of the safety air belt of the present invention;
Fig. 3 is a schematic front view showing installation and use of the safety air belt of the present invention;
Fig. 4 is a schematic perspective view showing installation and use of the safety air belt of the present invention;
Fig. 5 is a partially enlarged sectional view of a lock hanger of the section A of Fig. 3;
Fig. 6 is a view corresponding to Fig. 5, but showing another embodiment of the present invention;

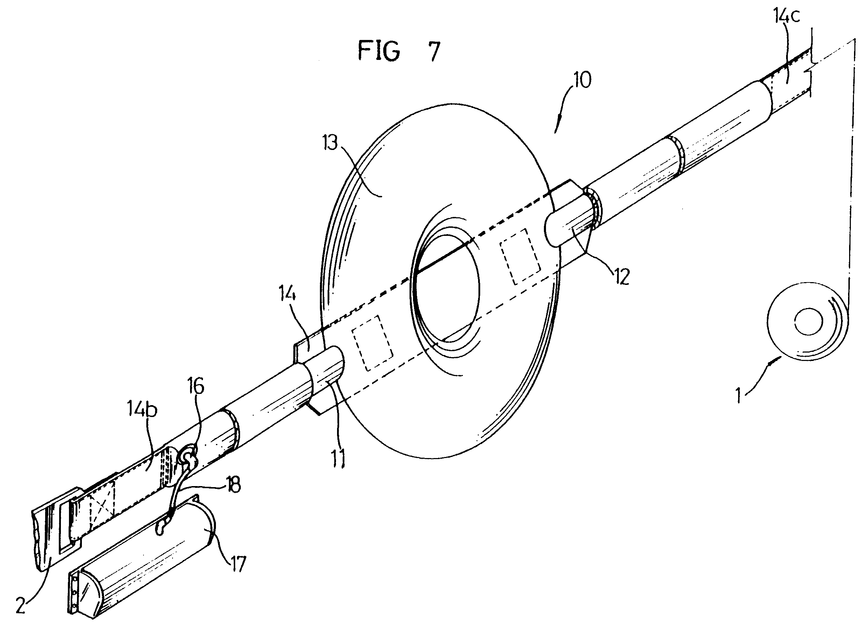

Fig. 7 is a partial perspective view showing operation of the safety air belt of the present invention; and

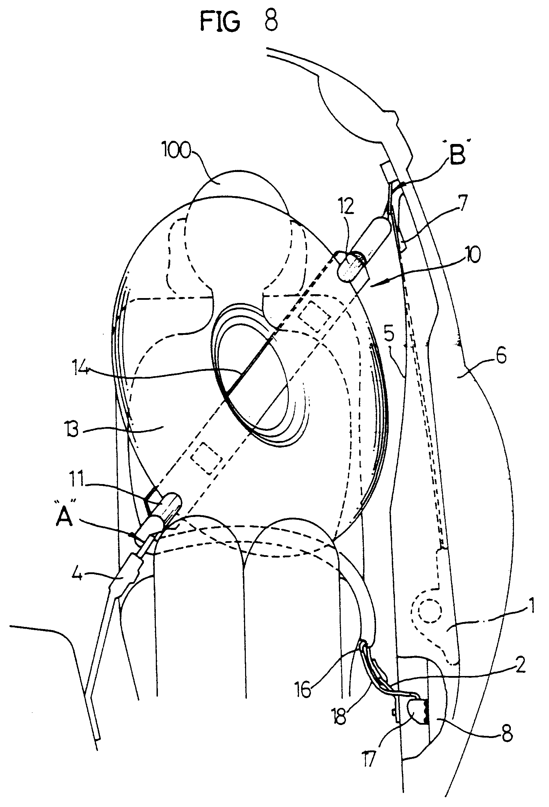

Fig. 8 is a schematic front view showing the operation of the safety air belt of the present invention combined with a car body.

### DESCRIPTION OF THE PREFERRED EMBODIMENTS

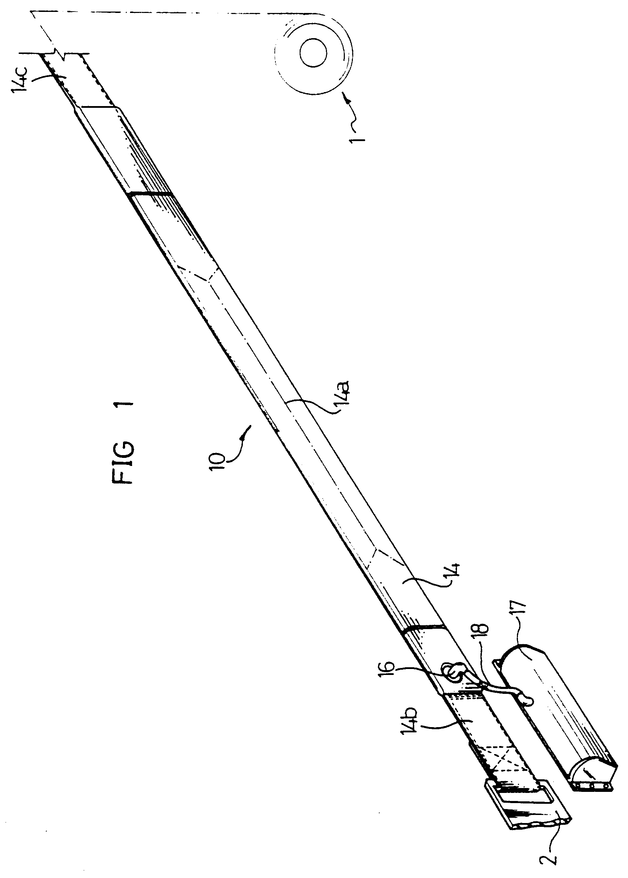

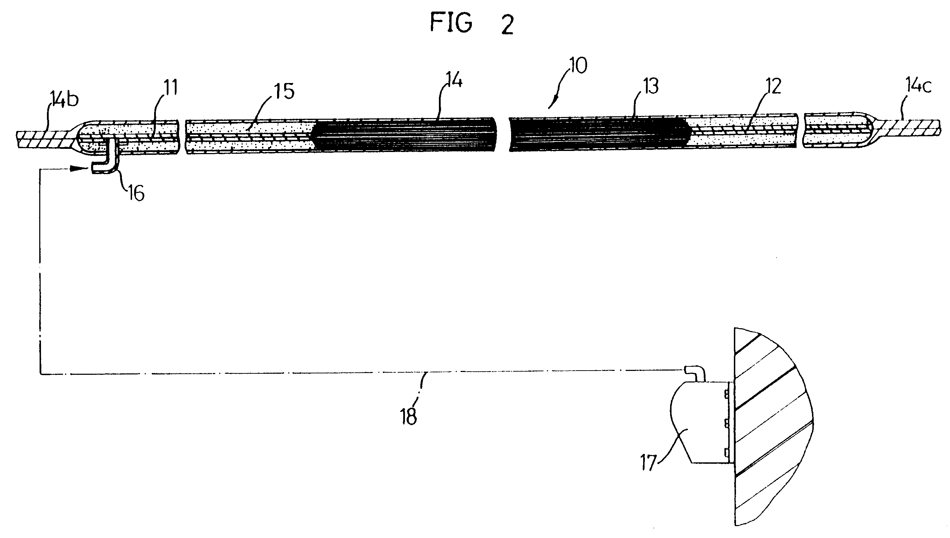

With reference to Figs. 1 to 4, there is shown a safety air belt with an air bag in accordance with an embodiment of the present invention. The safety air belt 10 is connected at an end thereof to a take-up member 1 and at the other end thereof to a fixing member 2 provided at the inside of the car body. A lock hanger "A" is movably inserted on a middle portion of the belt 10 and detachably locked to a locking member 4 fixed to a car body. The belt 10 also includes therein a pair of air passages 11 and 12 which communicate with each other through an air bag 13. This air bag 13 is packed in a belt section between the air passages 11 and 12 in such a manner that it is normally folded several times. The air passages 11 and 12 as well as the air bag 13 are covered with a protection cover 14 made of a fabric material or other material. The protection cover 14 is partially breakable at a section 14a corresponding to the air bag 13 and connected at its opposed ends to tightly sewed sections 14b and 14c. This protection cover 14 is connected at its sewed section 14c to the take-up member 1 and at its sewed section 14b to the fixing member 2 and receives the lock hanger A thereon such that the lock hanger A freely moves along the protection cover 14. A nipple 16 is mounted on a side of the protection cover 14 such that it communicates with the air passage 11. The nipple 16 is in turn connected to an operating device 17 through a high pressure hose 18.

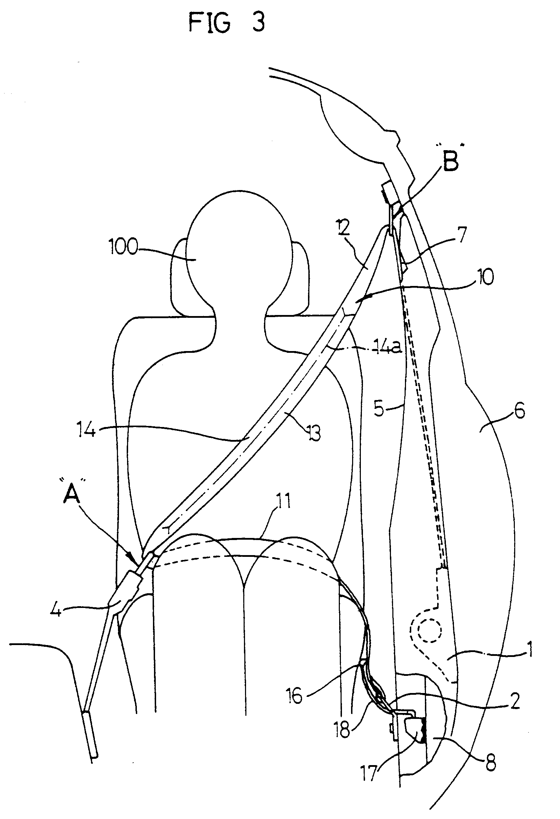

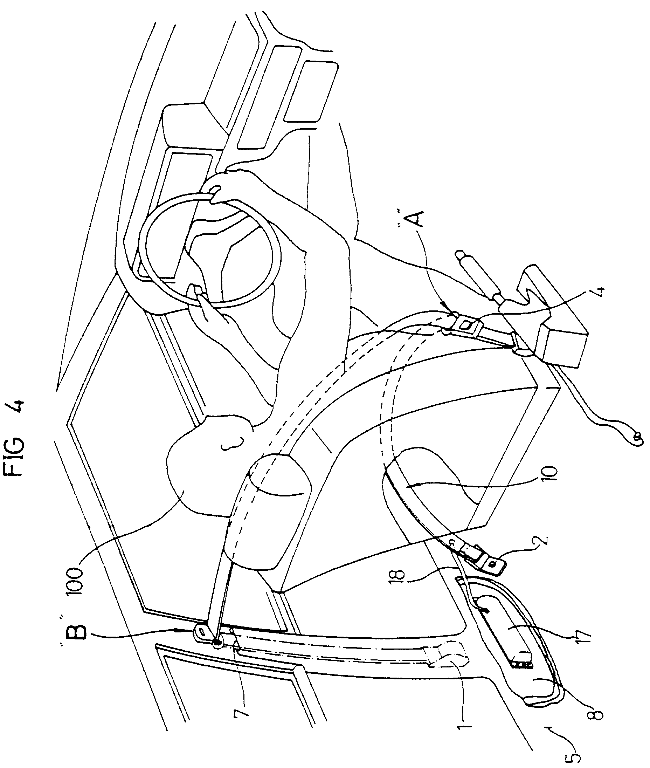

In order to use the safety air belt of this invention, a passenger 100 pulls the safety air belt 10 while gripping the lock hanger A and, thereafter, locks the lock hanger A to the locking member 4 fixed to the car body. Thus, the belt 10 covered by the protection cover 14 and having the air passages 11 and 12 and the air bag 13 integrally formed with the air passages 11 and 12 are fastened around the passenger's body as shown in Fig. 3 and 4. At this time, a section of the protection cover 14 having the air passage 11 surrounds the abdomen of the passenger 100 while the breakable section 14a having the air bag 13 diagonally surrounds the upper body of the passenger 100 from the side to the shoulder of the passenger 100. The other section of the protection cover 14 having the air passage 12 is positioned between the shoulder of the passenger 100 to a hanger "B" fixed to the car body.

In the safety air belt 10 of this invention, a protection member 15 such as made of a sponge is placed between the protection cover 14 and each of the air passages 11 and 12. The air bag 13 is bonded to the protection cover 14 at its rear surface such that it is prevented from separation from the protection cover 14 when it is charged with the pressurized air to be expanded.

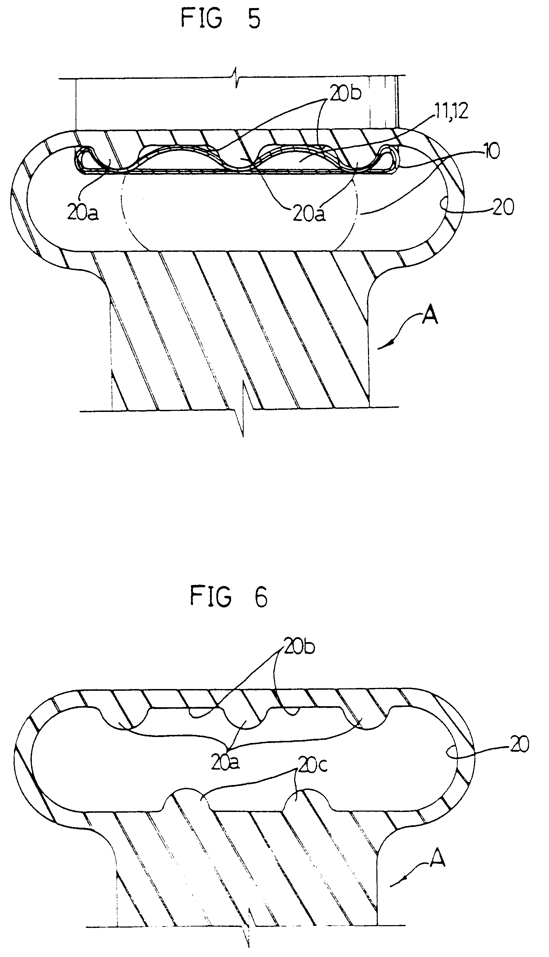

The lock hanger A is locked to and released from the locking member 4 as shown in Figs. 3 and 4. This lock hanger A has an opening 20 through which the belt 10 passes and which is provided at its upper periphery with a plurality of rounded protrusions 20a spaced out at regular intervals to form recesses 20b therebetween as shown in Fig. 5. Thanking for the rounded protrusions 20a of the lock hanger A, the air passages 11 and 12 of the belt 10 are not blocked even when the belt 10 is folded at the lock hanger A and, therefore, the pressurized air supplied by the operating device 17 smoothly passes through the folded section of the belt 10 to fills the air passages 11 and 12 as well as the air bag 13.

In accordance with a second alternate embodiment of the present invention, the lock hanger A may be provided with a plurality of rounded protrusions 20c at the lower periphery of the opening 20 in addition of the protrusions 20a as shown in Fig. 6. In the second alternate embodiment, the protrusions 20a and 20c are alternately placed such that the protrusions 20c face to individual recesses 20b between the protrusions 20a.

As shown in Figs. 3 and 4, the take-up member 1 is fixed to the car body between an interior material 5 and an outer frame 6 of the car body and takes up or supplies the belt 10 through an opening 7 provided on an upper section of the interior material 5 in the same manner as the prior art.

The operating device 17 is fixed to a side frame 8 of the car body such that part of the high pressure hose 18 is exposed to the outside of the interior material 5 and connected at the distal end of the hose 18 to the nipple 16 of the belt 10. The operating device 17 may be selected from devices, such as disclosed in Korean Utility Model Appln. Nos. 91-19000, 92-463 and 92-9078 applied by this applicant, which are appropriate to operate the safety air belt of this invention.

The operational effect of the safety air belt of this invention will be described hereinafter.

In order to use the safety air belt, the passenger 100 pulls the safety air belt 10 while gripping the lock hanger A, so that the belt 10 is supplied from the take-up member 1 through the opening 7 of the interior material 5. The lock hanger A is, thereafter, locked to the locking member 4 fixed to the car body, so that the belt 10 is used as a conventional safety belt. At this state, the section of the protection cover 14 having the air passage 11 surrounds the abdomen of the passenger 100 while the breakable section 14a having the air bag 13 diagonally surrounds the upper body of the passenger 100 from the side to the shoulder of the passenger 100. The other section of the protection cover 14 having the air passage 12 is positioned between the shoulder of the passenger 100 to the hanger "B" fixed to the car body.

Of course, when the lock hanger A is released from the locking member 4 in order to remove the belt 10 from the passenger's body, the take-up member 1 elastically pulls and takes up the belt 10 through the opening 7 of the interior material 5.

When the car body of the automobile is applied with an abrupt external shock such as caused by a traffic accident including automobile collision, the operating device 17 fixed to the side frame 8 of the car body starts to operate and supplies in a moment the pressurized air to the air passages 11 and 12 as well as to the air bag 13 in order to expand them. Hence, the air passages 11 and 12 charged with the pressurized air are expanded in the protection cover 14, thus to form an air belt. The air bag 13 folded in the breakable section 14a of the protection cover 14 is expanded by the pressurized air and breaks the breakable section 14a in order to be exposed to the outside of the protection cover 14.

At this state, the section corresponding to the air passage 11 and forming the air belt is fastened at the abdomen of the passenger 100 while the expanded air bag 13 exposed to the outside of the protect on belt 14 is interposed between the passenger 100 and the car body such that it covers most of the upper body of the passenger 100. The section corresponding to the air passage 12 and forming the air belt is positioned between the shoulder of the passenger 100 to the hanger "B" fixed to the car body. Hence, the safety air belt charged with the pressurized air prevents the passenger from direct collision with the car body and absorbs, due to the air cushion effect provided by both the air passages 11 and 12 and the air bag 13, the external shock which is caused by the automobile collision and otherwise directly applied to the abdomen, the breast and the shoulder of the passenger. The safety air belt of this invention thus prevents a serious injury of the passenger such as an intestinal rupture or fracture of a bone.

Particularly, the air bag 13, which is packed in the breakable section 14a of the protection cover 14 of the belt 10 diagonally surrounding the upper body of the passenger 100 from the side to the shoulder of the passenger 100, is exposed in a moment to the outside of the protection cover 14 from the upper and lower sides of the breakable section 14a when it is charged with the pressurized air. In this regard, the interposition of the expanded air bag 13 between the passenger 100 and the car body is completed in a shorter time than the prior art air bag which is installed at an upper section, a side section or a lower section of the car body and starts its expansion at its installation position prior to its interposition between the car body and the passenger. In addition, the air bag 13 of the safety air belt 10 of this invention starts its expansion under the condition that the breakable section 14a packing this air bag 13 is disposed at the center of the upper body of the passenger 100. Hence, a desired precise interposition of the expanded air bag 13 between the passenger 100 and the car body is reliably achieved irrespective of different body profiles of the passengers, thus to achieve desired safety.

Furthermore, the safety air belt 10 of this invention includes the air passages 11 and 12 provided in the protection cover 14 at opposed sides of the air bag 13 and communicating with each other though the air bag 13. Differently from the prior art safety belt, the belt sections, which have the air passages 11 and 12 therein and are positioned at the abdomen and at the shoulder of the passenger 100 respectively, become air belts when the air passages 11 and 12 are charged with the pressurized air, thus to absorb the shock caused by the automobile collision and to protect the abdomen and the shoulder of the passenger.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An automobile safety air belt connected at an end thereof to a take-up member of a car body and at the other end thereof to a fixing member of said car body, further comprising:
an air bag packed in a middle section of said belt such that it is exposed to the outside of said belt when it is charged with pressurized air and expanded;
first and second air passages provided in said belt on opposed sides of said air bag and communicating with each other through said air bag;
a protection cover covering said air bag as well as said air passages, said protection cover having a breakable section for receiving said air bag and allowing said air bag to be exposed to the outside of said cover through said breakable section when said air bag is charged with the pressurized air;
a lock hanger movably inserted on said protection cover and detachably locked to a locking member of said car body, said lock hanger having an opening for receiving said protection cover;
a nipple mounted on said protection cover such that it communicates with one of said air passages, said nipple being connected to operating means through a high pressure hose in order to supply the pressurized air from said operating means to said air passages as well as to said air bag.

2. The automobile safety air belt according to claim 1, wherein when said belt is fastened about a passenger body, a section of said protection cover having said first air passage surrounds the abdomen of said passenger, said breakable section having said air bag diagonally surrounds the upper body of said passenger from the side to the shoulder, and the other section of said protection cover having said second air passage is positioned between the shoulder of said passenger to a hanger fixed to said car body.

3. The automobile safety air belt according to claim 1 or 2, wherein a protection member is placed between said protection cover and each of said air passages and said air bag is bonded to an inner surface of said protection cover at its rear surface.

4. The automobile safety air belt according to claim 1, further comprising a pair of sewed sections connected to opposed ends of said protection cover, one of said sewed sections being connected to said take-up member but the other of said sewed sections being connected to said fixing member.

5. The automobile safety air belt according to claim 1, wherein said lock hanger is provided at an upper periphery of said opening with a plurality of rounded protrusions spaced out at regular intervals to form recesses therebetween.

6. The automobile safety air belt according to claim 5, further comprising a plurality of rounded protrusions provided on a lower periphery of said opening of the lock hanger.

7. The automobile safety air belt according to claim 1, wherein said operating means is fixed to a side frame of said car body such that it is covered by an interior material of said car body and part of said high pressure hose connected to said means is exposed to the outside of said interior material to be connected to said nipple.
